(19) Europäisches Patentamt / European Patent Office / Office européen des brevets

(11) **EP 4 078 771 B1**

(12) **FASCICULE DE BREVET EUROPEEN**

(45) Date de publication et mention de la délivrance du brevet:
**12.02.2025 Bulletin 2025/07**

(21) Numéro de dépôt: **20815882.4**

(22) Date de dépôt: **03.12.2020**

(51) Classification Internationale des Brevets (IPC):
**H02K 1/27** *(2022.01)*     **H02K 21/14** *(2006.01)*
**H02K 29/03** *(2006.01)*

(52) Classification Coopérative des Brevets (CPC):
**H02K 1/276; H02K 21/14; H02K 29/03;**
H02K 1/2766; H02K 2201/03; H02K 2213/03

(86) Numéro de dépôt international:
**PCT/EP2020/084526**

(87) Numéro de publication internationale:
**WO 2021/122044 (24.06.2021 Gazette 2021/25)**

(54) **MACHINE SYNCHRO-RELUCTANTE A ENTREFER VARIABLE**

SYNCHRONE RELUKTANZMASCHINE MIT VARIABLEM LUFTSPALT

SYNCHRONOUS RELUCTANCE MACHINE HAVING A VARIABLE AIR GAP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2019 FR 1914639**

(43) Date de publication de la demande:
**26.10.2022 Bulletin 2022/43**

(73) Titulaire: **IFP Energies nouvelles**
**92852 Rueil-Malmaison (FR)**

(72) Inventeurs:
• **ABDELLI, Abdenour**
**92852 RUEIL-MALMAISON CEDEX (FR)**
• **CHAREYRON, Baptiste**
**92852 RUEIL-MALMAISON CEDEX (FR)**
• **GAUSSENS, Benjamin**
**92852 RUEIL-MALMAISON CEDEX (FR)**
• **VALIN, Thomas**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A2- 2 463 988**     **KR-A- 20110 053 371**
**US-A1- 2012 043 155**

• **JUNG YOUNG-HOON ET AL: "Torque Ripple Reduction of IPMSM Applying Asymmetric Rotor Shape Under Certain Load Condition", IEEE TRANSACTIONS ON ENERGY CONVERSION, IEEE SERVICE CENTER, PISCATAWAY, NJ, US, vol. 33, no. 1, 1 March 2018 (2018-03-01), pages 333 - 340, XP011677916, ISSN: 0885-8969, [retrieved on 20180215], DOI: 10.1109/ TEC.2017.2752753**

## Description

### Domaine technique

La présente invention se rapporte à une machine électrique tournante, notamment une machine électrique synchro-réluctante (assistée d'aimants permanents), et concerne plus particulièrement un entrefer variable d'une telle machine, qui fonctionne avec un bus délivrant une tension préférablement continue et qui permet une vitesse de rotation élevée.

Généralement, une telle machine électrique comporte un stator et un rotor disposés coaxialement l'un dans l'autre.

Le rotor d'une machine électrique synchro-réluctante assistée d'aimants permanents est habituellement formé d'un corps de rotor avec un empilage de tôles placé sur un arbre de rotor. Ces tôles comprennent des logements pour des aimants permanents et des perforations pour créer des barrières de flux permettant de diriger radialement le flux magnétique des aimants vers le stator et pour favoriser la création d'un couple reluctant.

Ce rotor est généralement logé à l'intérieur d'un stator qui porte des bobinages électriques permettant de générer un champ magnétique permettant d'entraîner en rotation le rotor.

Comme cela est mieux décrit dans la demande de brevet WO2016188764, le rotor comprend une pluralité d'évidements axiaux qui traversent les tôles de part en part.

Une première série d'évidements axiaux, disposés radialement les uns au-dessus des autres et à distance les uns des autres, forment des logements pour des générateurs de flux magnétiques, ici des aimants permanents sous forme de barreau rectangulaire.

Cependant, il a été constaté que les harmoniques de force contre-électromotrice et l'ondulation du couple sont importantes dans ce type de machine synchrone à réluctance assistée d'aimants permanents.

Ceci peut générer des à-coups et des vibrations au niveau du rotor en entraînant un inconfort d'utilisation de cette machine.

Le document EP 2 463 988 A2 décrit l'entrefer à épaisseur variable sinusoïdale.

Le document CN206775356U décrit le champ magnétique sinusoïdal dans l'entrefer, ce qui peut réduire l'ondulation du couple et le bruit électromagnétique. De plus, le document CN208174384U décrit un évidement au niveau des surfaces d'un rotor, ce qui permet de réduire l'ondulation du couple moteur. Toutefois, ces machines électriques ne sont pas optimisées pour un spectre large de vitesses de rotation.

De manière générale, on observe que les machines électriques sont optimisées avec un entrefer minimum pour favoriser le couple ou bien avec un entrefer plus grand pour favoriser le rendement à haute vitesse.

La présente invention vise à remédier aux inconvénients énumérés ci-dessus, et notamment à changer la forme de l'entrefer afin de rechercher à la fois les performances de couple maximum à basse vitesse d'une machine à faible entrefer et les performances de puissance à haute vitesse de rotation d'une machine à grand entrefer.

### Le dispositif selon l'invention

La présente invention concerne une machine électrique selon la revendication 1.

Selon un mode de réalisation, chaque pôle magnétique comprend trois barrières de flux asymétriques qui sont une barrière de flux externe, une barrière de flux centrale et une barrière de flux interne. Chaque barrière de flux comprend deux évidements inclinés positionnés de part et d'autre de chaque évidement axial. Les deux évidements inclinés forment entre eux un angle d'ouverture qui correspond à l'angle entre deux droites passant chacune par le centre du rotor et par un point milieu positionné au niveau d'une face externe des évidements respectifs de chaque barrière de flux et lesdites barrières de flux ont sensiblement une forme de V à fond aplati.

Selon un mode de réalisation, le déphasage initial est directement déduit des angles d'ouverture des barrière de flux.

Selon un mode de réalisation, ledit nombre p de paires de pôles magnétiques est compris entre 2 et 9, de préférence entre 3 et 6, et vaut de manière préférée 4.

Selon un mode de réalisation, ledit rotor comporte une surface de contact avec ledit entrefer, sensiblement cylindrique, à rayon variable et ledit stator comporte une surface de contact avec ledit entrefer, sensiblement cylindrique, à rayon constant.

Selon un mode de réalisation, ledit entrefer a une épaisseur comprise entre 0.4 mm et 1 mm et l'épaisseur moyenne dudit entrefer est de préférence égale à 0.6 mm.

Selon un mode de réalisation, le rang de l'harmonique prédéterminé est un nombre entier pair.

Selon un mode de réalisation, le rang de l'harmonique prédéterminé est 2 ou 14 ou une combinaison de ces harmoniques.

Selon un mode de réalisation, ladite machine électrique est du type machine électrique synchro-réluctante, de préférence qui comporte 3 aimants dans chaque pôle magnétique.

## Liste des figures

D'autres caractéristiques et avantages de l'invention, apparaîtront à la lecture de la description ci-après d'exemples non limitatifs de réalisation, en se référant aux figures annexées et décrites ci-après.

La figure 1 illustre une machine électrique de l'art de la technique.
La figure 2 illustre une machine électrique de l'art de la technique.
La figure 3 illustre l'entrefer variable selon un mode de réalisation de l'invention.
La figure 4 illustre un exemple la variation de l'entrefer en fonction de la position mécanique.
La figure 5 illustre un exemple la variation de l'entrefer en fonction de la position électrique.
La figure 6 illustre la variation du couple moyen en fonction rang $h$ de l'harmonique et du déphasage $\Delta\theta$.
La figure 7 illustre l'ondulation du couple moyen en fonction rang $h$ de l'harmonique et du déphasage $\Delta\theta$.
La figure 8 illustre la variation de la puissance maximale en fonction rang $h$ de l'harmonique et du déphasage $\Delta\theta$.
La figure 9 illustre la variation de la puissance maximale à la vitesse de rotation maximale, ici 14.000 tours/min en fonction rang $h$ de l'harmonique et du déphasage $\Delta\theta$.
La figure 10 illustre la variation les pertes rotoriques à 70kW à la vitesse de rotation maximale, ici 14.000 tours/min en fonction rang $h$ de l'harmonique et du déphasage $\Delta\theta$.

## Description détaillée de l'invention

La présente invention concerne une machine électrique, notamment une machine électrique du type synchro-réluctante assistée d'aimants permanents. Dans la suite de la description, une machine électrique du type synchro-réluctant assistée d'aimants permanents est décrite, toutefois l'invention concerne tous types de machines électriques assistée d'aimants permanents, avec rotor interne.

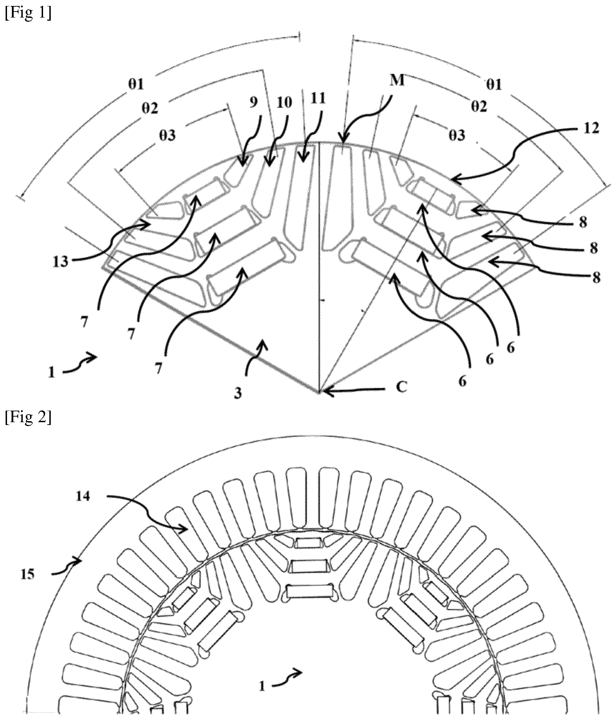

Telle que généralement connue dans l'art de la technique, une telle machine électrique est représentée à titre d'exemple et de manière non limitative sur les figures 1 et 2. La machine électrique est composée d'un rotor 1, qui comporte de manière connue en soi, un arbre (non représenté), de préférence magnétique, sur lequel est monté un empilage de tôles 3. Avantageusement, ces tôles 3 sont ferromagnétiques planes, identiques, laminées et de forme circulaire et sont assemblées les unes aux autres par tous moyens connus. Les tôles 3 peuvent comprendre un alésage central (non représenté) traversé par l'arbre de rotor et une pluralité d'évidements axiaux 6, 8 qui traversent les tôles 3 de part en part.

Une première série d'évidements axiaux 6, disposés radialement les uns au-dessus des autres et à distance les uns des autres, forment des logements pour des générateurs de flux magnétiques, ici des aimants permanents 7, préférentiellement sous forme de barreau. Les évidements axiaux 6 peuvent former sensiblement des trapèzes. Cependant les évidements axiaux 6 peuvent prendre d'autres formes, notamment des formes rectangulaires, carrées, etc.

Une deuxième série d'évidements consiste en des perforations de direction inclinée 8 par rapport à la direction radiale, qui partent des évidements axiaux 6 pour arriver au voisinage 12 du bord des tôles 3, c'est-à-dire au niveau d'un entrefer de la machine électrique.

Les perforations inclinées 8 sont disposées symétriquement par rapport aux évidements 6 des aimants 7 de manière à former à chaque fois une figure géométrique sensiblement en forme de V à fond aplati, avec le fond plat formé par le logement 6 des aimants 7 et avec les bras inclinés de ce V formés par les perforations inclinées 8. Les perforations inclinées 8 forment des barrières de flux. Le flux magnétique provenant des aimants 7 ne peut alors que transiter par les parties pleines des tôles 3 entre les évidements. Ces parties pleines sont constituées d'un matériau ferromagnétique.

Le rotor 3 illustré sur la figure 1 comprend p paires de pôles magnétiques (ou 2xp pôles magnétiques), un pôle magnétique étant formé des trois évidements 6 pour les aimants sur une même direction radiale, et les barrières de flux (9, 10, 11) associées.

A partir du nombre p de paires de pôles, on définit un pas polaire P. Exprimé en degré, le pas polaire peut être déterminé par une formule du type :

[Math 2]

$$P = \frac{360}{2 \times p}$$

Pour l'exemple illustré sur le figure 1, le rotor 1 comprend huit pôles magnétiques (p = 4), le pas polaire P vaut donc 45°. Chaque pôle magnétique est composé de trois aimants permanents 7 positionnés dans les trois évidements axiaux 6 prévus pour loger les aimants permanents 7. Le rotor 1 est également composé de trois barrières de flux, dont une barrière de flux externe 9 (associée à l'évidement 6 externe, c'est-à-dire le plus proche de la périphérie du rotor 1), une barrière de flux centrale 10 (associée à l'évidement 6 central) et une barrière de flux interne 11 (associée à l'évidement 6 interne, c'est-à-dire le plus proche du centre du rotor 1).

Tel qu'illustré sur la figure 2, la machine électrique comprend en outre un stator 15. Le stator 15 comporte un emplacement interne circulaire pour le rotor 1. Le stator 15 comporte également des encoches 14 dans lesquelles sont insérées des générateurs de flux magnétiques (non représentés), notamment des bobines électriques.

Tel que cela est visible sur les figures 1 et 2, chaque barrière de flux (9, 10, 11) comprend deux perforations inclinées qui sont disposées symétriquement par rapport aux logements des aimants 7 pour chaque pôle magnétique. Ainsi, il se forme à chaque fois une figure géométrique sensiblement en forme de V à fond aplati avec le fond plat formé par le logement 7 et avec les bras inclinés de ce V formés par les perforations inclinées. Pour chaque barrière de flux (9, 10, 11) de chaque pôle magnétique va correspondre un angle d'ouverture (θ1, θ2, θ3) qui va qualifier l'ouverture de la forme en V. Ces angles d'ouverture correspondent à l'angle entre deux droites passant chacune par le centre C du rotor 1 et par un point milieu M positionné au niveau d'une face externe 12 des perforations de direction radiale inclinée 8 de chaque barrière de flux. Cette face externe 12 se situe à la périphérie du rotor 1, au niveau d'un entrefer mécanique de la machine électrique comme cela sera vu par dans suite de la description.

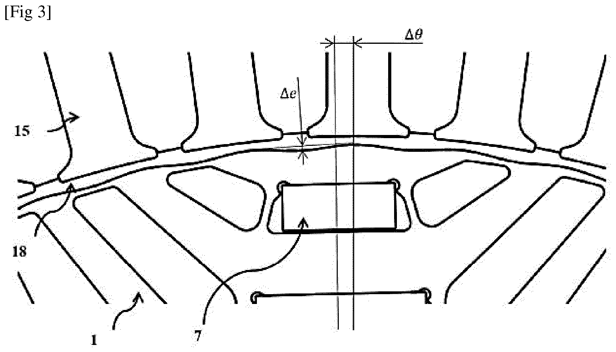

L'invention se caractérise par un entrefer variable, non constant en fonction de la position mécanique (la position mécanique étant la position angulaire au niveau de l'entrefer), tel qu'illustré dans la figure 3. La figure 3 illustre, de manière schématique et non limitative, les éléments constituant la machine électrique autour de l'entrefer 18. On peut y distinguer une machine électrique, comprenant un rotor 1 et un stator 15, le rotor 1 comprenant p paires de pôles magnétiques comportant chacun un axe de pôle magnétique et un entrefer 18 qui définit un espace entre le rotor 1 et le stator 15, ledit entrefer 18 ayant une épaisseur radiale non constante. La particularité de l'invention consiste à définir l'épaisseur $e_0(\theta_m)$ de l'entrefer 18 par la formule suivante :

[Math 3]

$$e_0(\theta_m) = e_{0,moyen} + \frac{\Delta e}{2}\cos(p * \theta_m * h + \Delta\theta)$$

Dans cette formule :

- $\theta_m$ : est la position mécanique dudit entrefer 18,
- $e_{0,moyen}$ : est l'épaisseur moyenne dudit entrefer 18,
- $\Delta e$ : est la variation maximale dudit entrefer 18,
- $p$ : est le nombre de paires de pôles,
- $h$ : est le rang de l'harmonique prédéterminé,
- $\Delta\theta$ : est le déphasage radial initial entre l'axe d'un pôle magnétique et le point de l'amplitude maximale de la fonction sinusoïdale.

La position mécanique $\theta_m$ de l'entrefer 18 est la position angulaire le long du parcours de l'entrefer 18. La position mécanique $\theta_m$ se mesure en degrés et peut varier entre 0° et 360°.

La dimension de l'entrefer 18 est la différence entre le rayon interne du stator 15 et le rayon externe du rotor 1.

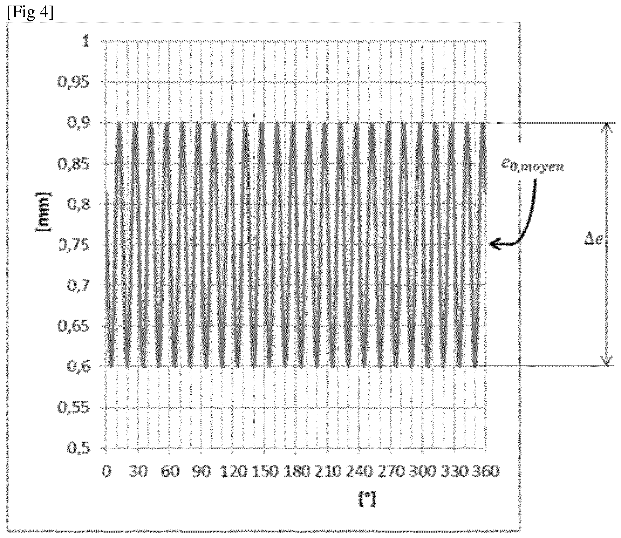

L'épaisseur moyenne $e_{0,moyen}$ de l'entrefer 18 est un paramètre de conception et de réalisation de la machine électrique. L'épaisseur moyenne $e_{0,moyen}$ de l'entrefer 18 se mesure en mm et se détermine comme la moyenne intégrée dans toutes les positions mécaniques $\theta_m$ entre 0° et 360° entre la plus faible épaisseur de l'entrefer 18, à une position mécanique $\theta_m$ où le stator 15 et le rotor 1 sont les plus proches et la plus grande épaisseur, à une autre position mécanique $\theta_m$ où le stator 15 et le rotor 1 sont les plus écartés l'un de l'autre. L'épaisseur moyenne $e_{0,moyen}$ est représentée sur la figure 4.

La variation maximale $\Delta e$ de l'entrefer 18 se mesure en mm et se détermine comme étant la différence entre la plus faible épaisseur de l'entrefer 18, à une position mécanique $\theta_m$ où le stator 15 et le rotor 1 sont les plus proches et la plus grande épaisseur, à une autre position mécanique $\theta_m$ où le stator 15 et le rotor 1 sont les plus écartés l'un de l'autre.

La variation maximale $\Delta e$ de l'entrefer 18 est représentée sur la figure 3. La variation maximale $\Delta e$ de l'entrefer 18 est également visible sur la figure 4 en observant les pics, qui, dans une variante de cette réalisation, sont à 0.9mm.

Le déphasage radial initial $\Delta\theta$ se mesure en degrés et se détermine comme étant l'angle entre l'axe d'un pôle magnétique (qui passe par le centre du rotor 1) et le rayon du rotor 1 passant par point le plus proche de variation maximale $\Delta e$. Le déphasage radial initial $\Delta\theta$ est représenté sur la figure 3.

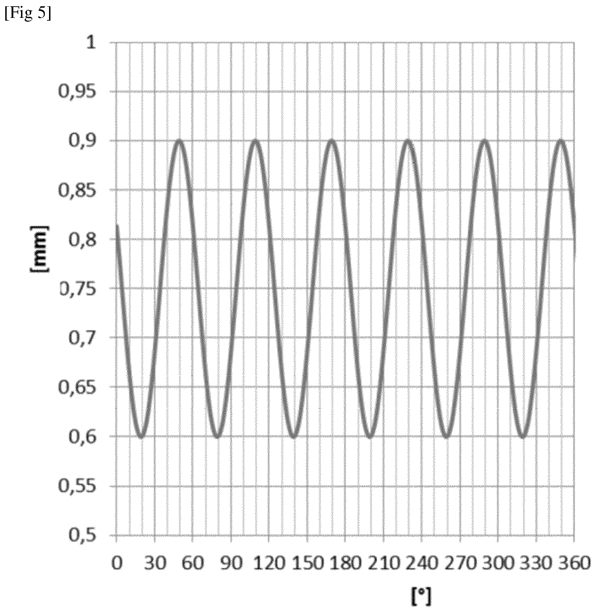

Les figures 4 et 5 représentent un exemple la variation de l'entrefer 18 en fonction de la position mécanique et respectivement de la position électrique ($\theta_e = p * \theta_m$). Par exemple, on peut voir la forme de l'entrefer en fonction de la position mécanique et électrique pour une machine à 4 paires de pôles, en considérant l'harmonique 6 et un déphasage de 65°.

Selon un mode de réalisation de l'invention, chaque pôle magnétique de la machine électrique peut être composé d'au moins trois aimants 7 positionnés dans des évidements axiaux 6. Ce mode de réalisation est illustré sur les figures 1, 2 et partiellement sur la figure 3. Sur la figure 1, on peut distinguer les trois aimants 7 positionnés, à titre d'exemple, dans des évidements axiaux 6 formant sensiblement des trapèzes et ayant au moins deux faces parallèles, ces faces étant sensiblement situées sur des tangentes centrées sur le centre du rotor 1. Sur la figure 3 on peut distinguer un évidement axial 6 avec des faces sensiblement radiales, le long des côtés des trapèzes. Chaque face sensiblement radiale comporte un point de contact et de centrage de l'aimant 7 et, de chaque côté de ce point de contact, deux sections courbes. Ces deux sections courbes sont préférablement sous forme d'arc de cercle ou plus avantageusement sous forme de goutte d'eau et les deux sections courbes sont préférablement plus courte l'une que l'autre.

Selon un mode de réalisation de l'invention, chaque pôle magnétique de la machine électrique peut comprendre trois barrières de flux asymétriques qui composent chaque pôle magnétique dont une barrière de flux externe 9, une barrière de flux centrale 10 et une barrière de flux interne 11. Tel qu'illustré sur la figure 1, chaque barrière de flux 9, 10, 11 comprend deux évidements inclinés 8 positionnés de part et d'autre de chaque évidement axial 6. Les deux évidements inclinés 8 forment entre eux un angle d'ouverture (θ1, θ2, θ3) qui correspond à l'angle entre deux droites passant chacune par le centre C (représenté sur la figure 1) du rotor 1 et par un point milieu M (représenté sur la figure 1) positionné au niveau d'une face externe 12 des évidements 8 respectifs de chaque barrière de flux 9, 10, 11. Lesdites barrières de flux ont sensiblement une forme de V à fond aplati. Les barrières de flux ont un rôle important dans le guidage des flux magnétiques.

Selon un mode de réalisation de l'invention, le déphasage initial $\Delta\theta$ peut être directement déduit des angles d'ouverture (θ1, θ2, θ3) des barrière de flux 9, 10, 11. En effet, le déphasage initial $\Delta\theta$, tel qu'illustré sur la figure 3, est un paramètre qui dépend directement des choix de conception de la machine électrique et en premier lieu de la géométrie des barrières de flux.

Selon un mode de réalisation de l'invention, ledit nombre p de paires de pôles magnétiques peut être compris entre 2 et 9, de préférence entre 3 et 6, et vaut de manière préférée 4. Sur les figures 1, 2 et 3 on retrouve une machine électrique ayant 4 pôles magnétiques. Cependant l'invention peut s'appliquer à tout nombre de paires de pôles souhaité.

Selon un mode de réalisation de l'invention, le rotor 1 peut comporter une surface de contact avec ledit entrefer 18 (c'est-à-dire une surface délimitant l'entrefer du côté du rotor), sensiblement cylindrique, à rayon variable. Ici, la variation de l'entrefer est illustrée sur la figure 4. Selon ce mode de réalisation, ledit stator 15 comporte une surface de contact avec ledit entrefer 18, sensiblement cylindrique, à rayon constant. En d'autres termes, la variation de l'épaisseur l'entrefer peut être réalisée, au moyen d'un rotor dont le rayon extérieur n'est pas constant.

Selon un mode de réalisation de l'invention, l'entrefer 18 peut avoir une épaisseur comprise entre 0.4 mm et 1 mm et l'épaisseur moyenne dudit entrefer 18 peut être de préférence égale à 0.7 mm. Lors de la réalisation de l'invention, l'homme du métier adapte l'épaisseur de l'entrefer en fonction de divers paramètres comme les dimensions générales des éléments constitutifs de la machine, des précisions de fabrication requis dans le domaine de l'application et également des performances attendues.

Afin de déterminer le choix du rang h de l'harmonique prédéterminé qui permet de maximiser les effets bénéfiques de la formule de l'invention, on propose d'étudier par la simulation numérique les paramètres les plus importants du fonctionnement de la machine électrique en fonction de la variation rang h de l'harmonique et du déphasage $\Delta\theta$, à savoir :

- le couple moyen

- l'ondulation de couple

- la puissance maximale

- la puissance maximale à vitesse maximale

- les pertes rotoriques.

Ces exemples non limitatifs sont réalisés pour une machine électrique synchro-réluctante assistée d'aimants permanents avec 4 paires de pôles et 3 aimants par pôle.

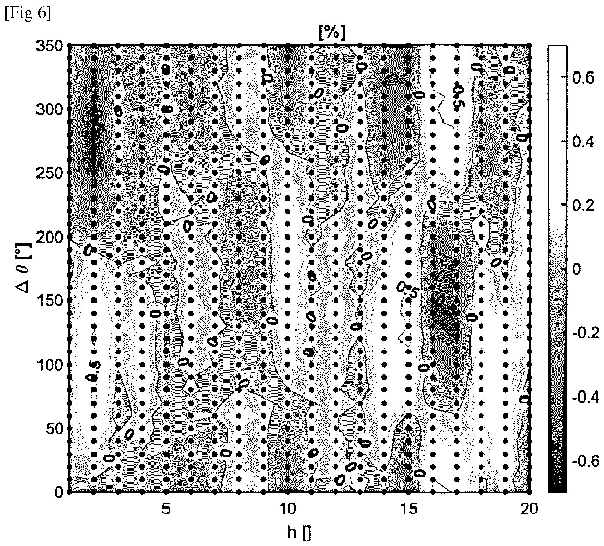

La figure 6 illustre la variation du couple moyen en fonction du rang $h$ de l'harmonique et du déphasage $\Delta\theta$. Conformément à la légende de droite, le niveau d'intensité du gris correspond à une variation de couple en fonction du rang $h$ de l'harmonique et du déphasage $\Delta\theta$. On constate que la variation de couple est très faible avec une variation de +/-0.7% par rapport au couple moyen maximal. Cependant, on constate également que certains rangs des harmoniques engendrent une variation plus importante que d'autres. Par exemple, les rangs des harmoniques 2, 10, 14, 15, 16 et 17 semblent influer de manière plus prépondérante que les autres harmoniques sur le couple moyen, voir les zones claires de la figure.

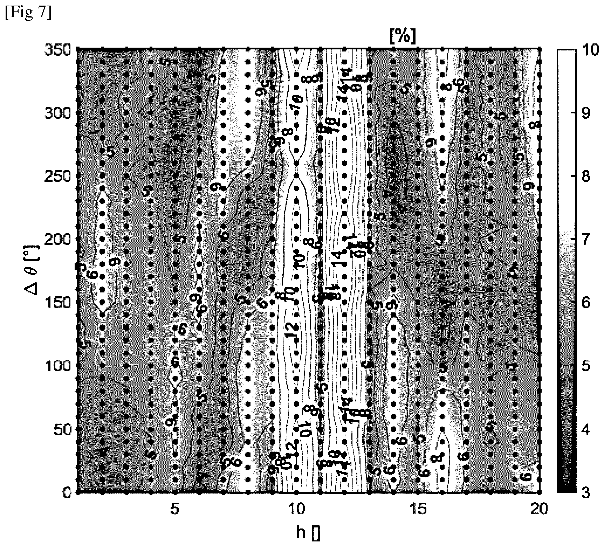

La figure 7 illustre l'ondulation du couple moyen en fonction rang $h$ de l'harmonique et du déphasage $\Delta\theta$. Conformément à la légende de droite, le niveau d'intensité du gris correspond à une ondulation du couple moyen en fonction du rang $h$ de l'harmonique et du déphasage $\Delta\theta$. On constate que certains rangs des harmoniques ont un impact négatif très marqué sur les performances de la machine électrique, voir les zones claires. On note ainsi que certains rangs des harmoniques semblent générer beaucoup d'ondulation, dans l'intervalle des rangs des harmoniques entre 9 et 12. La création de nouveaux harmoniques de couples dans cet intervalle est préjudiciable pour un bon fonctionnement de la machine électrique car on recherche au contraire, la diminution des vibration crées par l'ondulation du couple. Comme dans le cas précédent, certains rangs des harmoniques et de déphasage semblent plus favorables à la diminution de l'ondulation de couple.

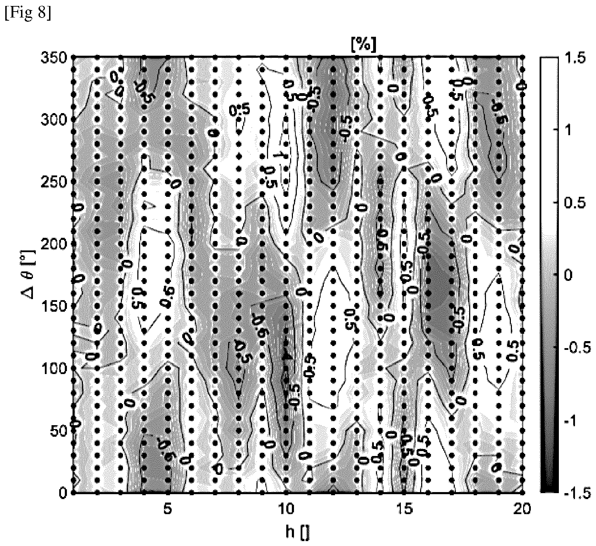

La figure 8 illustre la variation de la puissance maximale en fonction rang $h$ de l'harmonique et du déphasage $\Delta\theta$. Conformément à la légende de droite, le niveau d'intensité du gris correspond à une puissance maximale en fonction du rang $h$ de l'harmonique et du déphasage $\Delta\theta$. On constate que la variation de puissance est faible avec une variation de +/-1.5% par rapport à la moyenne. On constate que les rangs des harmoniques jouant sur la puissance maximale sont sensiblement identique à ceux du couple moyen comme 10 et 14 par exemple, voir les zones claires, mais certains apparaissent, ici 4 et 5, et d'autres disparaissent, ici 2. Cependant, les variations sont particulièrement faibles.

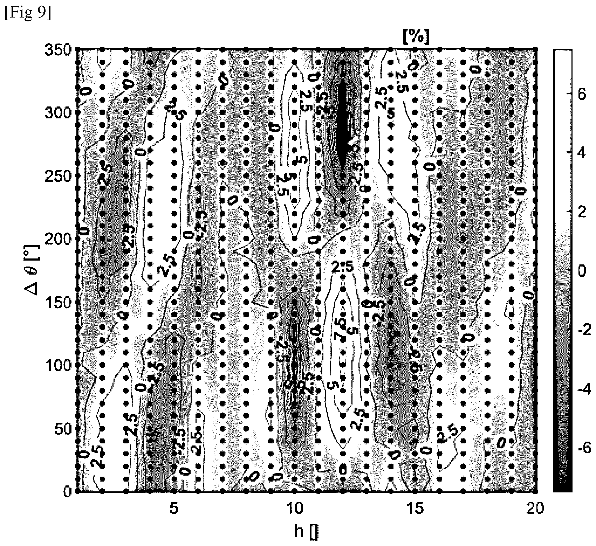

La figure 9 illustre la variation de la puissance maximale à la vitesse de rotation maximale, ici 14.000 tours/min en fonction rang $h$ de l'harmonique et du déphasage $\Delta\theta$. Conformément à la légende de droite, le niveau d'intensité du gris correspond à une variation de la puissance maximale en fonction du rang $h$ de l'harmonique et du déphasage $\Delta\theta$. On constate que certains rangs des harmoniques ont un impact positif très marqué sur les performances de la machine électrique, voir les zones claires. On note la possibilité potentielle de gagner plus de 7% par rapport à la puissance moyenne suivant les rangs des harmoniques considérés, à savoir les rangs 4, 10, 12 et 14.

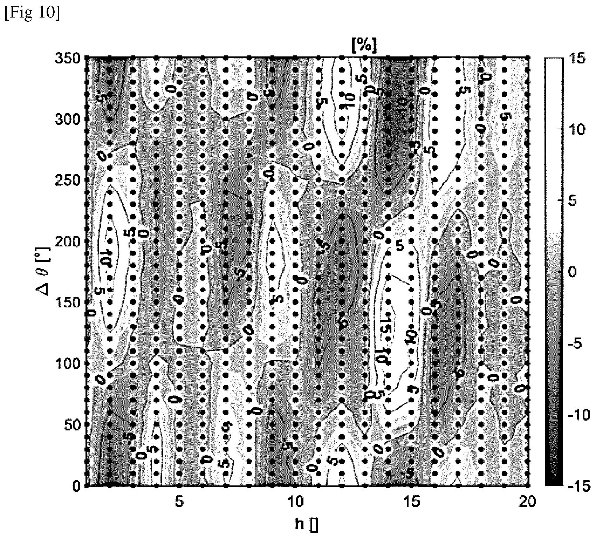

La figure 10 illustre la variation les pertes rotoriques à 70kW à la vitesse de rotation maximale, ici 14.000 tours/min en fonction rang $h$ de l'harmonique et du déphasage $\Delta\theta$. Conformément à la légende de droite, le niveau d'intensité du gris correspond à une variation des pertes rotoriques en en fonction du rang $h$ de l'harmonique et du déphasage $\Delta\theta$. On constate que certains rangs des harmoniques ont un impact positif très marqué sur les pertes rotoriques, peuvent être diminué de 15% par rapport à la valeur moyenne, voir les zones claires. Plus particulièrement, les rangs des harmoniques 2, 12 et 14 semblent très intéressants pour réduire les pertes rotoriques.

On regroupe les résultats des études précédentes dans le tableau 1 suivant (le signe 0 correspond à un impact sensiblement nul, le signe + correspond à un impact positif, le signe ++ correspond à un impact positif très marqué, le signe - correspond à un impact négatif, le signe -- correspond à un impact négatif très marqué) :

[Table 1]

| Rang de l'harmonique | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|
| Couple Max | ○ | ++ | ○ | + | ○ | ○ | ○ | ○ | ○ | + | ○ | ○ | ○ | + | ++ | ++ | ++ | + | ○ | ○ |
| Ondulation | ○ | ++ | ○ | ○ | + | + | ○ | + | ○ | - | ○ | - | ○ | ++ | ○ | + | ○ | ○ | ○ | ○ |
| Puissance Max | ○ | ○ | ○ | + | + | ○ | ○ | + | ○ | ++ | ○ | ++ | ○ | ++ | ++ | ++ | ++ | ○ | ++ | ○ |
| Puissance @Vmax | ○ | ++ | ++ | + | + | + | ○ | ○ | ○ | ++ | ○ | +++ | ○ | ++ | ++ | ○ | ○ | ○ | ○ | ○ |
| Pertes rotor | ○ | ++ | ○ | + | ○ | ○ | + | ○ | + | ○ | ○ | + | ○ | +++ | ++ | + | + | ○ | + | ○ |

On quantifie l'avantage de l'entrefer à épaisseur variable sinusoïdale qui permet de pouvoir à la fois tendre vers les performances de couple maximum à basse vitesse, caractéristique d'une machine à faible entrefer et également vers les performances de rendement et puissance maximale à haute vitesse de rotation d'une machine à grand entrefer.

On met en évidence que les harmoniques 2 et 14 sont les plus intéressants pour la machine électrique étudiée.

Selon un mode de réalisation de l'invention, le rang de l'harmonique prédéterminé est donc un nombre entier pair. Préférablement, le rang de l'harmonique prédéterminé est 2 ou 14. Alternativement on peut également choisir une combinaison de ces harmoniques.

Les résultats présentés ici sont montrés pour une machine ayant 4 paires de pôle, mais la formulation générique de la forme d'entrefer et l'étude par rang harmonique permettent de généraliser ce résultat quel que soit le nombre de paires de pôles.

Selon un mode de réalisation de l'invention, ladite machine électrique est du type machine électrique synchro-réluctante, avec quatre paires de pôles, de préférence qui comportent 3 aimants dans chaque pôle magnétique. De préférence, pour cette conception de machine électrique, les harmoniques pris en compte dans la formule définie pour l'épaisseur de l'entrefer sont les harmoniques 2 et/ou 14.

**Revendications**

1. Machine électrique, comprenant un rotor (1) et un stator (15), le rotor (1) comprenant:

   o p paires de pôles magnétiques comportant chacun un axe de pôle magnétique,
   o un entrefer (18) qui définit un espace entre le rotor (1) et le stator (15), ledit entrefer (18) ayant une épaisseur radiale non constante,
   **caractérisée en ce que** ledit entrefer (18) a une épaisseur $e_0(\theta_m)$ définie par la formule suivante :

$$e_0(\theta_m) = e_{0,moyen} + \frac{\Delta e}{2} \cos \left( p * \theta_m * h + \Delta\theta \right)$$

   où :

   ◦ $\theta_m$ : est la position mécanique dudit entrefer (18) mesuré en degrés et variant entre 0° et 360°,
   ◦ $e_{0,moyen}$ : est l'épaisseur moyenne dudit entrefer (18) mesuré en mm et se déterminant comme la moyenne intégrée dans toutes les positions mécaniques $\theta_m$ entre 0° et 360°,
   o $\Delta e$ : est la variation maximale dudit entrefer (18), mesuré en mm et se déterminant comme étant la différence entre la plus faible épaisseur de l'entrefer (18), à une position mécanique $\theta_m$ le stator (15) et le rotor (1) sont les plus proches et la plus grande épaisseur, à une autre position mécanique $\theta_m$ le stator (15) et le rotor (1) sont les plus écartés l'un de l'autre,
   o $p$ : est le nombre de paires de pôles,
   ◦ $h$ : est un nombre entier représentant un rang d'harmonique prédéterminé,
   ◦ $\Delta\theta$ : est le déphasage radial initial entre l'axe d'un pôle magnétique et le point de l'amplitude maximale de la fonction sinusoïdale.

2. Machine électrique selon la revendication 1, dans laquelle chaque pôle magnétique est composé d'au moins trois aimants (7) positionnés dans des évidements axiaux (6).

3. Machine électrique selon la revendication 2, comprenant trois barrières de flux asymétriques qui composent chaque pôle magnétique dont une barrière de flux externe (9), une barrière de flux centrale (10) et une barrière de flux interne (11), chaque barrière de flux (9, 10, 11) comprend deux évidements inclinés (8) positionnés de part et d'autre de chaque évidement axial (6), les deux évidements inclinés (8) forment entre eux un angle d'ouverture ($\theta$1, $\theta$2, $\theta$3) qui correspond à l'angle entre deux droites passant chacune par le centre C du rotor (1) et par un point milieu (M) positionné au niveau d'une face externe (12) des évidements (8) respectifs de chaque barrière de flux (9, 10, 11) et lesdites barrières de flux ont sensiblement une forme de V à fond aplati.

4. Machine électrique selon la revendication 3, dans laquelle le déphasage initial $\Delta\theta$ est directement déduit des angles d'ouverture ($\theta$1, $\theta$2, $\theta$3) des barrière de flux (9, 10, 11).

5. Machine électrique selon l'une des revendications précédentes, dans laquelle ledit nombre p de paires de pôles magnétiques est compris entre 2 et 9, de préférence entre 3 et 6, et vaut de manière préférée 4.

6. Machine électrique selon l'une des revendications précédentes dans laquelle ledit rotor (1) comporte une surface de contact avec ledit entrefer (18), sensiblement cylindrique, à rayon variable et ledit stator (15) comporte une surface de contact avec ledit entrefer (18), sensiblement cylindrique, à rayon constant.

7. Machine électrique selon l'une des revendications précédentes dans laquelle ledit entrefer (18) a une épaisseur comprise entre 0.4 mm et 1 mm et l'épaisseur moyenne dudit entrefer (18) est de préférence égale à 0.7 mm.

8. Machine électrique selon l'une des revendications précédentes dans laquelle le rang de l'harmonique prédéterminé est un nombre entier pair.

9. Machine électrique selon l'une des revendications précédentes dans laquelle le rang de l'harmonique prédéterminé est 2 ou 14 ou une combinaison de ces harmoniques.

10. Machine électrique selon l'une des revendications précédentes dans laquelle ladite machine électrique est du type machine électrique synchro-réluctante, de préférence qui comporte 3 aimants dans chaque pôle magnétique.

**Patentansprüche**

1. Elektrische Maschine, die einen Rotor (1) und einen Stator (15) beinhaltet, wobei der Rotor (1) Folgendes beinhaltet:

   ○ p Magnetpolpaare, die jeweils eine Magnetpolachse umfassen,
   ○ einen Luftspalt (18), der einen Raum zwischen dem Rotor (1) und dem Stator (15) definiert, wobei der Luftspalt (18) eine nicht konstante radiale Dicke aufweist,

   **dadurch gekennzeichnet, dass** der Luftspalt (18) eine Dicke $e_0(\theta_m)$ aufweist, die durch die folgende Formel definiert wird:

   $$e_0(\theta m) = e_{0,mittel} + \frac{\Delta e}{2}\cos\left(p * \theta m * h + \Delta\theta\right)$$

   wobei:

   ○ $\theta_m$: die mechanische Position des Luftspalts (18) ist, die in Grad gemessen wird und zwischen 0° und 360° variiert,
   ○ $e_{0,mittel}$: die mittlere Dicke des Luftspalts (18) ist, die in mm gemessen wird und als der integrierte Mittelwert in allen mechanischen Positionen $\theta_m$ zwischen 0° und 360° bestimmt wird,
   ○ $\Delta e$: die maximale Variation des Luftspalts (18) ist, die in mm gemessen wird und als die Differenz zwischen der kleinsten Dicke des Luftspalts (18) bestimmt wird, an einer mechanischen Position $\theta_m$, befinden sich der Stator (15) und der Rotor (1) am nächsten zueinander und die größte Dicke, an einer anderen mechanischen Position $\theta_m$, sind der Stator (15) und der Rotor (1) am weitesten voneinander beabstandet,
   ○ $p$: die Anzahl von Polpaaren ist,
   ○ $h$: eine ganze Zahl ist, die eine vorbestimmte Oberschwingungsordnung darstellt,
   ○ $\Delta\theta$: die anfängliche radiale Phasenverschiebung zwischen der Achse eines Magnetpols und dem Punkt der maximalen Amplitude der Sinusfunktion ist.

2. Elektrische Maschine nach Anspruch 1, wobei jeder Magnetpol aus mindestens drei Magneten (7) besteht, die in axialen Aussparungen (6) positioniert sind.

3. Elektrische Maschine nach Anspruch 2, die drei asymmetrische Flussbarrieren beinhaltet, die jeden Magnetpol bilden, darunter eine äußere Flussbarriere (9), eine mittlere Flussbarriere (10) und eine innere Flussbarriere (11), wobei jede Flussbarriere (9, 10, 11) zwei geneigte Aussparungen (8) beinhaltet, die zu beiden Seiten jeder axialen Aussparung (6) positioniert sind, wobei die zwei geneigten Aussparungen (8) zwischen sich einen Öffnungswinkel (θ1, θ2, θ3) bilden, der dem Winkel zwischen zwei Geraden entspricht, die jeweils durch die Mitte C des Rotors (1) und durch einen Mittelpunkt (M), der im Bereich einer Außenfläche (12) der jeweiligen Aussparungen (8) jeder Flussbarriere (9, 10, 11) positioniert ist, verlaufen, und wobei die Flussbarrieren im Wesentlichen eine V-Form mit abgeflachtem Boden aufweisen.

4. Elektrische Maschine nach Anspruch 3, wobei die anfängliche Phasenverschiebung $\Delta\theta$ direkt aus den Öffnungs-winkeln (θ1, θ2, θ3) der Flussbarrieren (9, 10, 11) abgeleitet wird.

5. Elektrische Maschine nach einem der vorhergehenden Ansprüche, wobei die Anzahl p von Magnetpolpaaren zwischen 2 und 9, vorzugsweise zwischen 3 und 6 und am bevorzugtesten 4 beträgt.

**6.** Elektrische Maschine nach einem der vorhergehenden Ansprüche, wobei der Rotor (1) mit dem Luftspalt (18) eine im Wesentlichen zylindrische Kontaktoberfläche mit variablem Radius umfasst und der Stator (15) mit dem Luftspalt (18) eine im Wesentlichen zylindrische Kontaktoberfläche mit konstantem Radius umfasst.

**7.** Elektrische Maschine nach einem der vorhergehenden Ansprüche, wobei der Luftspalt (18) eine Dicke zwischen 0,4 mm und 1 mm aufweist und die mittlere Dicke des Luftspalts (18) vorzugsweise 0,7 mm beträgt.

**8.** Elektrische Maschine nach einem der vorhergehenden Ansprüche, wobei die vorbestimmte Ordnung der Oberschwingung eine gerade ganze Zahl ist.

**9.** Elektrische Maschine nach einem der vorhergehenden Ansprüche, wobei die vorbestimmte Ordnung der Oberschwingung 2 oder 14 oder eine Kombination aus diesen Oberschwingungen ist.

**10.** Elektrische Maschine nach einem der vorhergehenden Ansprüche, wobei die elektrische Maschine vom Typ elektrische synchrone Reluktanzmaschine ist, die vorzugsweise 3 Magneten in jedem Magnetpol umfasst.


**Claims**

**1.** Electric machine, comprising a rotor (1) and a stator (15), the rotor (1) comprising:

> o p pairs of magnetic poles each having a magnetic pole axis,
> ○ an air gap (18) defining a space between the rotor (1) and the stator (15), said air gap (18) having a nonconstant radial thickness,

**characterized in that** said air gap (18) has a thickness $e_0(\theta_m)$ defined by the following formula:

$$e_0(\theta m) = e_{0,average} + \frac{\Delta e}{2} \cos\left(p * \theta m * h + \Delta \theta\right)$$

wherein:

> ○ $\theta_m$: is the mechanical position of said air gap (18) measured in degrees and varying between 0° and 360°,
> ○ $e_{0,average}$: is the average thickness of said air gap (18) measured in mm and determined as the average value integrated over all the mechanical positions $\theta_m$ between 0° and 360°,
> ○ $\Delta e$: is the maximum variation of said air gap (18), measured in mm and determined as the difference between the smallest thickness of the air gap (18), in a mechanical position $\theta_m$ the stator (15) and the rotor (1) are closest together and the greatest thickness, in another mechanical position $\theta_m$ the stator (15) and the rotor (1) are furthest apart from one another,
> ○ $p$: is the number of pairs of poles,
> ○ $h$: is an integer representing a predetermined harmonic rank,
> ○ $\Delta \theta$: is the initial radial phase shift between the axis of a magnetic pole and the point of the maximum amplitude of the sinusoidal function.

**2.** Electric machine according to Claim 1, wherein each magnetic pole is composed of at least three magnets (7) positioned in axial voids (6).

**3.** Electric machine according to Claim 2, comprising three asymmetric flux barriers which make up each magnetic pole, which include one outer flux barrier (9), one centre flux barrier (10) and one inner flux barrier (11), each flux barrier (9, 10, 11) comprising two inclined voids (8) that are positioned on either side of each axial void (6), the two inclined voids (8) forming an opening angle (θ1, θ2, θ3) between them which corresponds to the angle between two straight lines each passing through the centre C of the rotor (1) and through a midpoint (M) positioned on an outer face (12) of the respective voids (8) of each flux barrier (9, 10, 11) and said flux barriers are substantially V-shaped with a flat base.

**4.** Electric machine according to Claim 3, wherein the initial phase shift $\Delta \theta$ is directly deduced from the opening angles (θ1, θ2, θ3) of the flux barriers (9, 10, 11).

5. Electric machine according to one of the preceding claims, wherein said number p of pairs of magnetic poles is between 2 and 9, preferably between 3 and 6, and is preferably 4.

6. Electric machine according to one of the preceding claims, wherein said rotor (1) has a contact surface, which is substantially cylindrical and of variable radius, with said air gap (18), and said stator (15) has a contact surface, which is substantially cylindrical and of constant radius, with said air gap (18).

7. Electric machine according to one of the preceding claims, wherein said air gap (18) is between 0.4 mm and 1 mm thick, and the average thickness of said air gap (18) is preferably 0.7 mm.

8. Electric machine according to one of the preceding claims, wherein the predetermined rank of the harmonic is an even integer.

9. Electric machine according to one of the preceding claims, wherein the predetermined rank of the harmonic is 2 or 14 or a combination of these harmonics.

10. Electric machine according to one of the preceding claims, wherein said electric machine is a synchronous reluctance electric machine, preferably having 3 magnets in each magnetic pole.

[Fig 1]

[Fig 2]

[Fig 3]

[Fig 4]

[Fig 5]

[Fig 6]

[Fig 7]

[Fig 8]

[Fig 9]

[Fig 10]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016188764 A
- EP 2463988 A2
- CN 206775356 U
- CN 208174384 U